# FASCICULE DE BREVET EUROPEEN

(11) **EP 3 816 002 B1**
(45) Date de publication et mention de la délivrance du brevet: **13.04.2022**
(21) Numéro de dépôt: 20204752.8
(22) Date de dépôt: 29.10.2020
(51) Int. Cl.: B60T 17/22, B60G 17/00, B60T 8/18, B60T 8/17, B60T 13/40

(54) **DISPOSITIF D'ALIMENTATION PNEUMATIQUE D'UN SYSTÈME DE FREINAGE PNEUMATIQUE, ET VÉHICULE DE TRANSPORT ASSOCIÉ**
PNEUMATISCHE ZULEITUNGSVORRICHTUNG EINES PNEUMATISCHEN BREMSSYSTEMS, UND ENTSPRECHENDES TRANSPORTFAHRZEUG
DEVICE FOR PNEUMATIC SUPPLY OF A PNEUMATIC BRAKING SYSTEM, AND ASSOCIATED TRANSPORT VEHICLE

(30) Priorité: 30.10.2019 FR 1912188
(43) Date de publication de la demande: 05.05.2021
(73) Titulaire: SpeedInnov, 75008 Paris (FR)
(72) Inventeur: BRISOU, Florent, 17540 FONTPATOUR DE VERINES (FR); GUIGNER, Carl, 17170 FERRIERES D'AUNIS (FR); CHOPIN, Nicolas, 17180 PERIGNY (FR); SARTI, Christophe, 17220 SAINT MÉDARD D'AUNIS (FR)
(74) Mandataire: Lavoix

(56) Documents cités:
- DE-A1- 2 129 325
- US-A- 4 817 536

## Description

La présente invention concerne un dispositif d'alimentation pneumatique d'un système de freinage pneumatique pour un véhicule de transport, tel qu'un véhicule ferroviaire.

L'invention concerne également un véhicule de transport, tel qu'un véhicule ferroviaire, comprenant un tel dispositif d'alimentation pneumatique.

L'invention s'applique au domaine des transports, en particulier des transports ferroviaires. L'invention s'applique notamment aux véhicules de transports ferroviaire comprenant un système de freinage pneumatique. Les documents US 4 817 536 A et DE 21 29 325 A1 divulguent des exemples d'un dispositif d'alimentation pneumatique d'un système de freinage pneumatique pour un véhicule de transport.

Pour contrôler le freinage d'un système de freinage pneumatique d'un véhicule de transport, il est nécessaire d'utiliser un dispositif d'alimentation pneumatique permettant de commander une pression de freinage fournie au système de freinage, la puissance du freinage dépendant de la pression de freinage alimentant le système de freinage pneumatique.

Pour une même puissance de freinage, la distance d'arrêt du véhicule de transport dépend de sa charge, la distance d'arrêt étant plus élevée pour un véhicule chargé que pour un véhicule vide. Ainsi, afin que la distance d'arrêt soit inférieure à une distance de freinage maximale de sécurité, il est nécessaire d'adapter la puissance de freinage, et donc la pression de freinage fournie au système de freinage pneumatique en fonction de la charge du véhicule de transport. A cet effet, la pression de freinage est commandée de sorte qu'elle soit plus élevée lorsque le véhicule de transport est chargé que lorsqu'il est vide.

En outre, un tel véhicule de transport est généralement équipé de suspensions pneumatiques secondaires s'étendant entre une caisse et un châssis du véhicule. Les suspensions pneumatiques secondaires comprennent des éléments de suspension gonflés à une pression de suspension secondaire en fonction de la hauteur souhaitée pour la caisse par rapport au sol. La hauteur de la caisse et donc du véhicule dépend notamment de la charge du véhicule et la pression de suspension secondaire est fonction de la charge du véhicule.

Par conséquent, il est possible de mesurer la pression de suspension secondaire et d'adapter la pression de freinage fournie au système de freinage pneumatique en fonction de la pression de suspension secondaire mesurée, afin de prendre en compte la charge du véhicule pour commander la pression de freinage.

Cependant, en cas de panne des suspensions pneumatiques secondaires, les éléments de suspension secondaire peuvent être dégonflés et donc à une pression de suspension secondaire proche de la pression atmosphérique. Dans ce cas, la pression de freinage fournie au système de freinage pneumatique est adaptée pour une pression de suspension secondaire proche de la pression atmosphérique et donc pour un véhicule à vide. Cela implique une puissance de freinage potentiellement trop faible pour respecter la distance de freinage maximale de sécurité lorsque le véhicule est chargé. Un telle panne des suspensions pneumatiques secondaires peut notamment être due à un problème informatique d'un contrôleur d'électrovannes des suspensions pneumatiques secondaires régulant la pression de suspension secondaire,

Pour un freinage de service, c'est-à-dire un freinage normal lors de la circulation du véhicule de transport, par exemple lors de l'arrivée à un quai, il est possible de compenser logiciellement la pression de freinage fournie, par exemple en détectant une pression de suspension secondaire anormalement faible et en fournissant une pression de freinage plus importante le cas échéant.

Par contre, pour un freinage d'urgence, pour des raisons de contraintes de sécurité, la commande de la pression de freinage est réalisée pneumatiquement, par exemple à l'aide d'un relais de débit. Une compensation logicielle de la pression de freinage, telle que pour le freinage de service n'est alors pas réalisable.

L'un des buts de l'invention est de proposer un dispositif d'alimentation pneumatique d'un système de freinage pneumatique permettant de respecter une distance de freinage maximale de sécurité, quelle que soit la charge du véhicule, et même en cas de pression de suspension secondaire anormalement faible.

A cet effet, l'invention a pour objet un dispositif d'alimentation pneumatique d'un système de freinage pneumatique pour un véhicule de transport, tel qu'un véhicule ferroviaire, dans lequel le véhicule comprend une source de pression et une suspension pneumatique secondaire alimentée par la source de pression, la suspension pneumatique secondaire comportant un élément de suspension propre à emmagasiner une quantité prédéfinie d'un fluide pressurisé à une pression de suspension secondaire prédéfinie. Le dispositif comprend un système de distribution pneumatique propre à être alimenté par la source de pression et configuré pour délivrer une pression d'alimentation en fonction d'un signal de consigne de freinage, et un relais de débit comportant une entrée d'alimentation connectée pneumatiquement au système de distribution pneumatique et recevant la pression d'alimentation délivrée par le système de distribution pneumatique, une entrée de régulation, propre à recevoir une pression de régulation, et une sortie, destinée à délivrer au système de freinage pneumatique une pression de freinage en fonction de la pression d'alimentation et de la pression de régulation. Le dispositif comprend, en outre, un distributeur de sécurité propre à être connecté pneumatiquement entre l'entrée de régulation du relais de débit, la source de pression et l'élément de suspension, le distributeur de sécurité étant configuré pour commuter, en fonction de la pression de suspension secondaire, entre une première configuration dans laquelle l'entrée de régulation du relais de débit est reliée pneumatiquement à l'élément de suspension, de sorte que la pression de régulation soit fonction de la pression de suspension secondaire, et une deuxième configuration dans laquelle l'entrée de régulation du relais de débit est reliée pneumatiquement à la source de pression, de sorte que la pression de régulation est égale à une pression fournie par la source de pression.

Un tel dispositif d'alimentation pneumatique permet de fournir une pression de freinage à un système de freinage pneumatique permettant de respecter une distance de freinage maximale de sécurité, même en cas de panne de la suspension pneumatique secondaire. En effet, en fonctionnement normal, le relais de débit est dans sa première configuration et l'entrée de régulation du relais de débit est reliée pneumatiquement à la source de pression. La pression de freinage est alors adaptée en fonction de la pression de suspension secondaire et donc de la charge du véhicule. Lorsque la pression de suspension secondaire est anormalement faible, le distributeur de sécurité est dans sa deuxième configuration et l'entrée de régulation du relais de débit est reliée pneumatiquement à la source de pression. La pression de freinage est alors adaptée en fonction d'une pression importante de la source de pression, ce qui implique une puissance de freinage importante permettant de respecter la distance de freinage maximale de sécurité quelle que soit la charge du véhicule de transport.

Suivant d'autres aspects avantageux, le dispositif d'alimentation comporte l'une ou plusieurs des caractéristiques suivantes, selon toutes les combinaisons techniquement possibles :
- le distributeur de sécurité comprend un distributeur pneumatique autonome comportant une première entrée destinée à être reliée pneumatiquement à l'élément de suspension, une deuxième entrée destinée à être reliée pneumatiquement à la source de pression, une sortie reliée pneumatiquement à l'entrée de régulation du relais de débit, et une commande pneumatique destinée à être reliée pneumatiquement à l'élément de suspension ;
- le distributeur de sécurité comprend un commutateur de pression propre à convertir la pression de suspension secondaire en un signal électrique de commutation, et une électrovanne de sécurité comportant une première entrée destinée à être reliée pneumatiquement à l'élément de suspension, une deuxième entrée destinée à être reliée pneumatiquement à la source de pression, une sortie reliée pneumatiquement à l'entrée de régulation du relais de débit, et une commande électrique reliée électriquement au commutateur de pression et propre à recevoir le signal électrique de commutation ;
- le distributeur de sécurité est dans la première configuration si la pression de suspension secondaire est supérieure ou égale à une pression prédéterminée, et dans la deuxième configuration si la pression de suspension secondaire est inférieure à la pression prédéterminée, ladite pression prédéterminée étant supérieure à la pression atmosphérique ;
- le système de distribution pneumatique comprend une électrovanne de freinage de service connectée pneumatiquement entre la source de pression et l'entrée d'alimentation du relais de débit, apte à assurer l'admission et/ou l'échappement d'air à l'entrée d'alimentation du relais de débit, et une unité de commande configurée pour commander l'électrovanne de freinage de service en fonction du signal de consigne de freinage ;
- le système de distribution pneumatique comprend, en outre, un capteur de pression propre à mesurer la pression de régulation à l'entrée de régulation du relais de débit, l'unité de commande étant configurée pour commander l'électrovanne de freinage de service en fonction du signal de consigne de freinage et de la pression de régulation mesurée ;
- le système de distribution pneumatique comprend, en outre, une électrovanne de freinage d'urgence connectée pneumatiquement entre l'entrée d'alimentation du relais de débit, l'électrovanne de freinage de service et la source de pression, l'unité de commande étant configurée pour commander une commutation de l'électrovanne de freinage d'urgence entre une configuration de freinage de service dans laquelle l'entrée d'alimentation du relais de débit est reliée pneumatiquement à l'électrovanne de freinage de service, et une configuration de freinage d'urgence dans laquelle l'entrée d'alimentation du relais de débit est reliée pneumatiquement à la source de pression ;
- le relais de débit est apte à assurer l'admission d'air de son entrée d'alimentation à sa sortie, si le rapport de la pression de régulation sur la pression de freinage est strictement supérieur à une valeur de rapport prédéfinie, et l'échappement d'air à sa sortie, si le rapport de la pression de régulation sur la pression de freinage est strictement inférieur à la valeur de rapport prédéfinie.

L'invention a également pour objet un véhicule de transport, tel qu'un véhicule ferroviaire, comprenant une source de pression, une suspension pneumatique secondaire alimentée par la source de pression, la suspension pneumatique secondaire comportant un élément de suspension propre à emmagasiner une quantité prédéfinie de fluide pressurisé à une pression de suspension secondaire prédéfinie, un système de freinage pneumatique, et un dispositif d'alimentation pneumatique du système de freinage pneumatique tel que décrit ci-dessus, le système de distribution pneumatique du dispositif d'alimentation pneumatique étant alimenté par la source de pression, la sortie du relais de débit du dispositif d'alimentation pneumatique délivrant au système de freinage pneumatique la pression de freinage, et le distributeur de sécurité du dispositif d'alimentation pneumatique étant connecté pneumatiquement entre l'entrée de régulation du relais de débit, la source de pression et l'élément de suspension.

Suivant d'autres aspects avantageux, le véhicule de transport comporte la caractéristique suivante : la suspension pneumatique secondaire comporte, en outre, une électrovanne de suspension secondaire connectée pneumatiquement entre la source de pression et l'élément de suspension, ladite électrovanne de suspension secondaire étant apte à réguler la pression de suspension secondaire en fonction d'un signal électrique de commande.

D'autres aspects et avantages de l'invention apparaîtront à la lecture de la description qui va suivre, donnée uniquement à titre d'exemple non limitatif, et faite en référence aux dessins annexés sur lesquels :
- [Fig 1] la figure 1 est une représentation schématique d'un véhicule de transport selon l'invention comprenant notamment un dispositif d'alimentation pneumatique selon l'invention,
- [Fig 2] la figure 2 est une représentation schématique d'une suspension pneumatique secondaire connectée à un dispositif d'alimentation pneumatique, selon un premier mode de réalisation de l'invention, le dispositif d'alimentation pneumatique alimentant un système de freinage, et
- [Fig 3] la figure 3 est une représentation schématique d'une suspension pneumatique secondaire connectée à un dispositif d'alimentation pneumatique, selon un deuxième mode de réalisation de l'invention, le dispositif d'alimentation pneumatique alimentant un système de freinage.

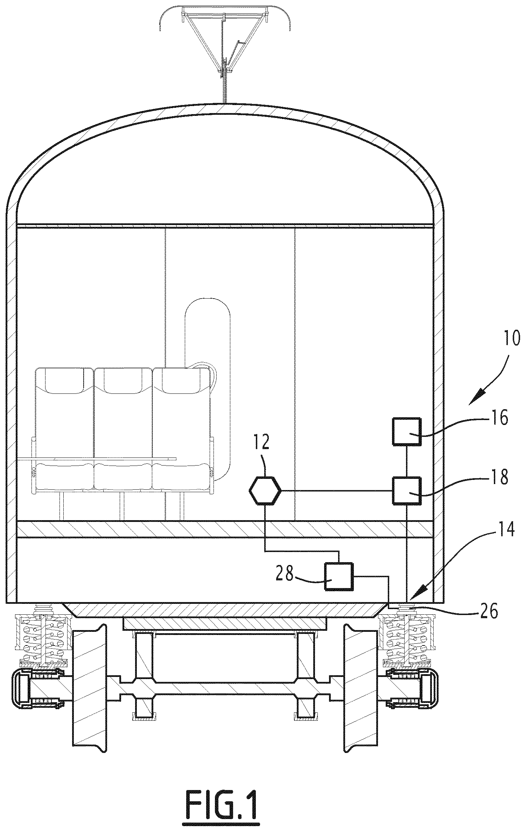

Les figures 1 représentent un véhicule 10 de transport, tel qu'un véhicule ferroviaire.

Le véhicule 10 comprend une source de pression 12 alimentant au moins une suspension pneumatique secondaire 14.

Le véhicule 10 comprend, en outre, pour chaque suspension pneumatique secondaire 14, un système de freinage pneumatique 16 et un dispositif d'alimentation pneumatique 18 du système de freinage pneumatique 16, alimenté par la source de pression 12.

Par soucis de clarté, sur la figure 1 sont représentés un unique système de freinage pneumatique 16 et un unique dispositif d'alimentation pneumatique 18.

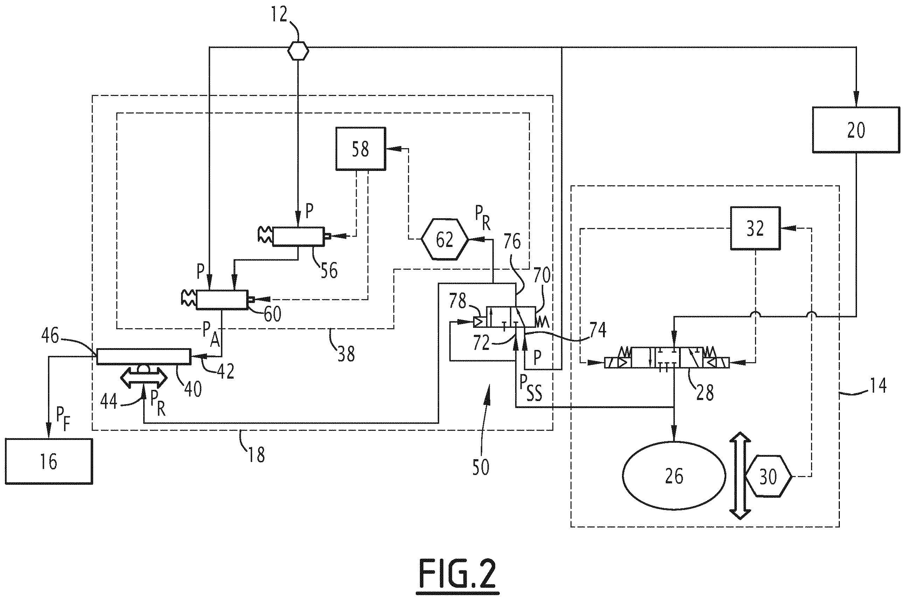

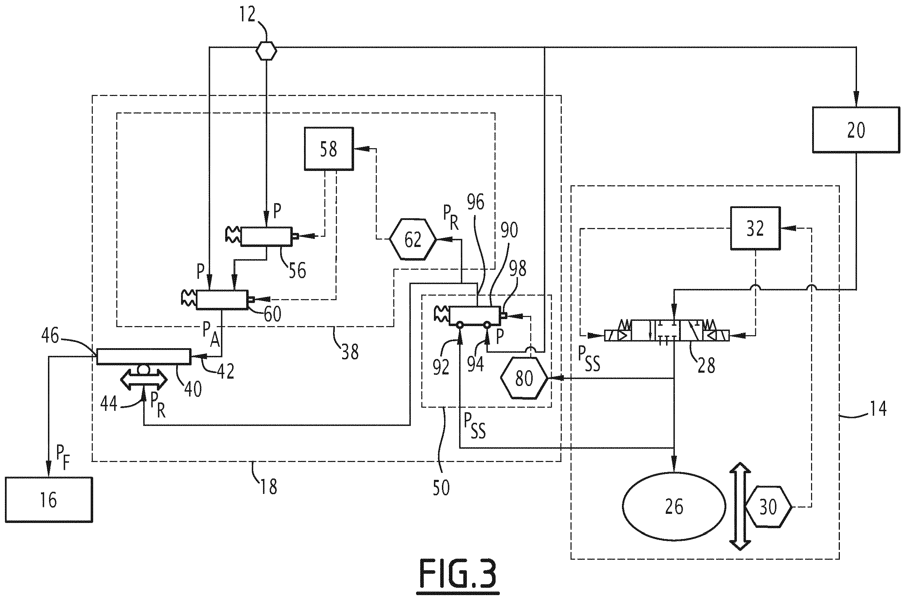

Les figures 2 et 3 représentent plus en détail la source de pression 12, la suspension pneumatique secondaire 14, le système de freinage 16 et le dispositif d'alimentation 18 selon différents modes de réalisation.

En complément facultatif, le véhicule 10 comprend, en outre, un module d'isolement 20 connecté pneumatiquement entre la source de pression 12 et la suspension pneumatique secondaire 14.

La source de pression 12 est par exemple une canalisation principale du véhicule 10.

La source de pression 12 est apte à faire circuler un fluide pressurisé, à une pression P définie. Dans les exemples des figures 2 et 3, la pression P définie du fluide pressurisé fournie par la source de pression 12 est égale à 9 bar.

La suspension pneumatique secondaire 14 comporte un élément de suspension 26 propre à emmagasiner une quantité prédéfinie d'un fluide pressurisé à une pression de suspension secondaire P_{SS} prédéfinie.

La suspension pneumatique secondaire 14 comporte, en outre, une électrovanne de suspension secondaire 28 connectée pneumatiquement entre la source de pression 12 et l'élément de suspension 26, et apte à réguler la pression de suspension secondaire P_{SS} en fonction d'un signal électrique de commande.

Par exemple, la suspension pneumatique secondaire 14 comporte un capteur 30 apte à mesurer une hauteur entre une caisse et un châssis du véhicule 10, et un contrôleur de suspension secondaire 32 de l'électrovanne de suspension secondaire 28.

L'élément de suspension 26 est propre à supporter verticalement la caisse sur le châssis, et est par exemple formé par un coussin de suspension qui se gonfle lorsque le fluide pressurisé le remplit.

A titre d'illustration, en fonctionnement normal de la suspension secondaire 14, la pression de suspension secondaire P_{SS} varie entre 4 bar, lorsque le véhicule 10 est vide, et 8 bar, lorsque le véhicule 10 est chargé, par exemple, de passagers.

L'électrovanne de suspension secondaire 28 est connue en soi et est une vanne commandée par le signal électrique de commande. Elle est configurée pour réguler l'admission et/ou l'échappement de fluide vers/depuis l'élément de suspension 26, en fonction du signal électrique de commande. Par exemple, elle comprend trois positions : une position fermée, dans laquelle la circulation fluidique entre la source de pression 12 et l'élément de suspension 26 et entre l'élément de suspension 26 et l'extérieur est empêchée, une position ouverte en admission dans laquelle l'électrovanne de suspension secondaire 28 laisse circuler le fluide pressurisé depuis la source de pression 12 vers l'élément de suspension 26, et une position ouverte en échappement dans laquelle l'électrovanne de suspension secondaire 28 laisse s'échapper le fluide pressurisé de l'élément de suspension 26 dans l'atmosphère.

Le capteur 30 est connu en soi et est par exemple, un capteur de position positionné sur une partie inférieure de la caisse, au niveau de l'élément de suspension 26.

Le contrôleur de suspension secondaire 32 est connecté électriquement au capteur 30, et est configuré pour générer le signal électrique de commande en fonction de la hauteur mesurée et pour commander le passage de l'électrovanne de suspension secondaire 28 d'une position à une autre en fonction du signal électrique de commande.

Le système de freinage pneumatique 16 est connu en soi, et est apte à actionner le freinage du véhicule 10 à une puissance de freinage, par exemple via des cylindres de frein alimentés par un fluide pressurisé à une pression de freinage P_{F}, la puissance de freinage dépendant de la pression de freinage P_{F}

Le dispositif d'alimentation pneumatique 18 comprend un système de distribution pneumatique 38 alimenté par la source de pression 12 et configuré pour délivrer une pression d'alimentation P_{A} en fonction d'un signal de consigne de freinage.

Le dispositif d'alimentation pneumatique 18 comprend, en outre, un relais de débit 40 comportant une entrée d'alimentation 42 connectée pneumatiquement au système de distribution pneumatique 38 et recevant la pression d'alimentation P_{A} délivrée par le système de distribution pneumatique 38, une entrée de régulation 44, recevant une pression de régulation P_{R}, et une sortie 46, délivrant au système de freinage pneumatique 16 la pression de freinage P_{F} en fonction de la pression d'alimentation P_{A} et de la pression de régulation P_{R}.

Le dispositif d'alimentation pneumatique 18 comprend, en outre, un distributeur de sécurité 50 connecté pneumatiquement entre l'entrée de régulation 44 du relais de débit 40, la source de pression 12 et l'élément de suspension 26.

Selon les exemples des figures 2 et 3, le système de distribution pneumatique 38 est alimenté par la source de pression 12. Il comprend une électrovanne de freinage de service 56 connectée pneumatiquement entre la source de pression 12 et l'entrée d'alimentation 42 du relais de débit 42, et une unité de commande 58 configurée pour commander l'électrovanne de freinage de service 56 en fonction du signal de consigne de freinage.

Selon les exemples des figures 2 et 3, le système de distribution pneumatique 38 comprend, en outre, une électrovanne de freinage d'urgence 60 connectée pneumatiquement entre l'entrée d'alimentation 42 du relais de débit 40, l'électrovanne de freinage de service 56 et la source de pression 12.

Selon les exemples des figures 2 et 3, le système de distribution pneumatique 38 comporte, en outre, un capteur de pression 62 propre à mesurer la pression de régulation P_{R} à l'entrée de régulation 44 du relais de débit 40.

L'électrovanne de freinage de service 56 est connue en soi et est une vanne commandée par l'unité de commande 58. Elle est apte à assurer l'admission et/ou l'échappement d'air à l'entrée d'alimentation 42 du relais de débit 40. Plus précisément, elle est apte à assurer l'admission et/ou l'échappement d'air en entrée de l'électrovanne de freinage d'urgence 60.

Par exemple, elle comprend les mêmes positions que l'électrovanne de suspension secondaire 28.

L'unité de commande 58 est configurée pour commander le passage d'une position à l'autre de l'électrovanne de freinage de service 56 en fonction du signal de consigne de freinage reçu par l'unité de commande 58.

Le signal de consigne de freinage est par exemple émis par un système de commande du véhicule 10, non représenté, aussi appelé TCMS (de l'anglais *Train Control and Management system,* système de contrôle et de gestion de train).

Par exemple, le signal de consigne de freinage comprend un indicateur d'un type de freinage, le type de freinage correspondant à un freinage de service ou à un freinage d'urgence.

Par exemple, le signal de consigne de freinage comprend, en outre, pour un freinage de service, une consigne de distance et/ou de temps de freinage. L'unité de commande 58 est alors configurée pour commander le passage d'une position à l'autre de l'électrovanne de freinage de service 56 notamment en fonction de la consigne de distance et/ou de temps de freinage.

En complément, l'unité de commande 58 est configurée pour commander l'électrovanne de freinage de service 56 pour qu'il soit dans sa position ouverte en admission, lorsque le signal de consigne de freinage comprend l'indicateur d'un freinage d'urgence.

Alternativement, lorsque le signal de consigne de freinage comprend l'indicateur d'un freinage d'urgence, l'électrovanne de freinage de service 56 n'est pas commandée par l'unité de commande 58 et est laissée dans une position quelconque.

Lorsque le système de distribution pneumatique 38 comprend le capteur de pression 62, l'unité de commande 58 est, avantageusement, configurée pour commander le passage d'une position à l'autre de l'électrovanne de freinage de service 56 en fonction du signal de consigne de freinage et de la pression de régulation mesurée.

L'électrovanne de freinage d'urgence 60 est connue en soi. Elle est configurée pour relier pneumatiquement l'entrée d'alimentation 42 du relais de débit 40 à l'électrovanne de freinage de service 56 lors d'un freinage de service du véhicule 10, ou à la source de débit 12 lors d'un freinage d'urgence du véhicule 10, et délivrer à l'entrée d'alimentation 42 du relais de débit 40 la pression P_{A}.

L'électrovanne de freinage d'urgence 60 est, par exemple, un distributeur pneumatique commandé électriquement par l'unité de commande 58, et comprenant une configuration de freinage de service dans laquelle l'entrée d'alimentation 42 du relais de débit 40 est reliée pneumatiquement à l'électrovanne de freinage de service 56, et une configuration de freinage d'urgence dans laquelle l'entrée d'alimentation 42 du relais de débit 40 est reliée pneumatiquement à la source de pression 12.

L'unité de commande 58 est, en outre, configurée pour commander une commutation de l'électrovanne de freinage d'urgence 60 entre la configuration de freinage de service et la configuration de freinage d'urgence, en fonction du signal de consigne de freinage. Par exemple, l'unité de commande 58 est configurée pour commander l'électrovanne de freinage d'urgence 60 pour qu'elle soit dans sa configuration de freinage de service lorsque le signal de consigne de freinage comprend l'indicateur d'un freinage de service, et dans sa configuration de freinage d'urgence lorsque le signal de consigne de freinage comprend l'indicateur d'un freinage d'urgence.

Selon les exemples des figures 2 et 3, le relais de débit 40 est configuré pour délivrer au système de freinage pneumatique 16 la pression de freinage P_{F} en fonction de la pression d'alimentation P_{A} et de la pression de régulation P_{R}.

Le relais de débit 40 est apte à assurer l'admission d'air de son entrée d'alimentation 42 à sa sortie 46, si le rapport de la pression de régulation P_{R} sur la pression de freinage P_{F} est strictement supérieur à une valeur de rapport prédéfinie, et l'échappement d'air à sa sortie 46, si le rapport de la pression de régulation P_{R} sur la pression de freinage P_{F} est strictement inférieur la valeur de rapport prédéfinie. Le relais de débit 40 est apte à empêcher la circulation fluidique entre son entrée d'alimentation 42 et sa sortie 46, et entre sa sortie 46 et l'extérieur, si le rapport de la pression de régulation P_{R} sur la pression de freinage P_{F} est égal à la valeur de rapport prédéfinie.

Le relais de débit 40 est alors configuré pour asservir la pression P_{F} à une valeur consigne égale à la pression de régulation P_{R} divisée par la valeur de rapport prédéfinie, lorsque la pression d'alimentation P_{A} est supérieure à cette valeur consigne.

Lorsque la pression d'alimentation P_{A} est inférieure à ladite valeur consigne, par exemple lors d'un freinage de service, le rapport de la pression de régulation P_{R} sur la pression de freinage P_{F} est supérieur à la valeur de rapport prédéfinie, et l'entrée d'alimentation 42 du relais de débit 40 est alors constamment reliée pneumatiquement à sa sortie 46. La pression de freinage P_{F} est alors égale à la pression d'alimentation P_{A}.

La valeur de rapport prédéfinie est, par exemple, préalablement choisie afin que, lors d'un freinage d'urgence du véhicule 10, c'est-à-dire lorsque l'entrée d'alimentation 42 du relais de débit 40 est reliée pneumatiquement à la source de pression 12, le système de freinage 16, alimenté par la pression P_{F} asservie à la valeur consigne, permette un freinage du véhicule 10 sur une distance d'arrêt inférieure à une distance de freinage maximale de sécurité prédéfinie, lorsque la charge du véhicule 10 est dite maximale.

Selon les exemples des figures 2 et 3, le distributeur de sécurité 50 est connecté pneumatiquement entre l'entrée de régulation 44 du relais de débit 40, la source de pression 12 et l'élément de suspension 26.

Le distributeur de sécurité 50 est configuré pour commuter, en fonction de la pression de suspension secondaire P_{SS}, entre une première configuration dans laquelle l'entrée de régulation 44 du relais de débit 40 est reliée pneumatiquement à l'élément de suspension 26, de sorte que la pression de régulation P_{R} soit fonction de la pression de suspension secondaire P_{SS}, et une deuxième configuration dans laquelle l'entrée de régulation 44 du relais de débit 40 est reliée pneumatiquement à la source de pression 12, de sorte que la pression de régulation P_{R} est égale à la pression P fournie par la source de pression 12.

Le distributeur de sécurité 50 est dans la première configuration si la pression de suspension secondaire P_{SS} est supérieure ou égale à une pression prédéterminée, et dans la deuxième configuration si la pression de suspension secondaire P_{SS} est inférieure à la pression prédéterminée, ladite pression prédéterminée étant supérieure à la pression atmosphérique.

Par exemple, la pression prédéterminée est égale à 2 bar.

Selon un premier mode de réalisation représenté sur la figure 2, le distributeur de sécurité 50 comprend un distributeur pneumatique autonome 70 comportant une première entrée 72 reliée pneumatiquement à l'élément de suspension 26, une deuxième entrée 74 reliée pneumatiquement à la source de pression 12, une sortie 76 reliée pneumatiquement à l'entrée de régulation 44 du relais de débit 40, et une commande pneumatique 78 reliée pneumatiquement à l'élément de suspension 26.

Selon l'exemple de la figure 2, la première entrée 72 du distributeur pneumatique autonome 70 est reliée pneumatiquement à l'élément de suspension 26, sa deuxième entrée 74 est reliée pneumatiquement à la source de pression 12, et sa commande pneumatique 78 est reliée pneumatiquement à l'élément de suspension 26.

Par exemple, la première entrée 72 et la commande pneumatique 78 du distributeur pneumatique autonome 70 sont confondues.

Le distributeur pneumatique autonome 70 peut être placé dans une première position pour la première configuration du distributeur de sécurité 50, dans laquelle sa première entrée 72 est reliée pneumatiquement à sa sortie 76, et dans une deuxième position pour la deuxième configuration du distributeur de sécurité 50, dans laquelle sa deuxième entrée 74 est reliée pneumatiquement à sa sortie 76.

Le distributeur pneumatique autonome 70 est configuré pour être dans sa première position si la pression de suspension secondaire P_{SS} reçue à sa commande pneumatique 78 est supérieure ou égale à la pression prédéterminée, et dans sa deuxième position si la pression de suspension secondaire P_{SS} reçue à sa commande pneumatique 78 est inférieure à la pression prédéterminée.

Plus précisément, le distributeur pneumatique autonome 70 comprend, par exemple un piston actionné dans un premier sens par le fluide pressurisé reçu à la commande pneumatique 78 et dans un deuxième sens par un ressort. L'actionnement du piston dans le premier ou le deuxième sens permet alors le passage entre la première et la deuxième position du distributeur pneumatique autonome 70. Lorsque la pression de suspension secondaire P_{SS} est supérieure, et respectivement inférieure, à la pression prédéterminée, la force exercée sur le piston par le fluide pressurisé reçu à la commande pneumatique 78 est supérieure, et respectivement inférieure, à la force exercée sur le piston par le ressort, ce qui actionne le piston dans le premier sens, et respectivement dans le deuxième sens, permettant le passage dans la première position, et respectivement dans la deuxième position, du distributeur pneumatique autonome 70.

Selon un deuxième mode de réalisation représenté sur la figure 3, le distributeur de sécurité 50 comprend un commutateur de pression 80 propre à convertir la pression de suspension secondaire P_{SS} en un signal électrique de commutation, et une électrovanne de sécurité 90 comportant une première entrée 92 reliée pneumatiquement à l'élément de suspension 26, une deuxième entrée 94 pneumatiquement à la source de pression 12, une sortie 96 reliée pneumatiquement à l'entrée de régulation 42 du relais de débit 40, et une commande électrique 98 reliée électriquement au commutateur de pression et propre à recevoir le signal électrique de commutation.

Le commutateur de pression 80 est connecté pneumatiquement à l'élément de suspension 26 et électriquement à la commande électrique 98 de l'électrovanne de sécurité 90.

Le signal électrique de commutation est par exemple un signal logique. Le commutateur de pression 80 est configuré pour générer un signal logique ayant une valeur haute lorsque la pression de suspension secondaire P_{SS} reçue par le commutateur de pression 80 est supérieur à la pression prédéterminée, et une valeur basse lorsque la pression de suspension secondaire P_{SS} reçue par le commutateur de pression 80 est inférieure à la pression prédéterminée.

Selon l'exemple de la figure 3, la première entrée 92 de l'électrovanne de sécurité 90 est reliée pneumatiquement à l'élément de suspension 26, et sa deuxième entrée 94 est reliée pneumatiquement à la source de pression 12.

L'électrovanne de sécurité 90 peut être placée dans une première position pour la première configuration du distributeur de sécurité 50, dans laquelle sa première entrée 92 est reliée pneumatiquement à sa sortie 96, et dans une deuxième position pour la deuxième configuration du distributeur de sécurité 50, dans laquelle sa deuxième entrée 94 est reliée pneumatiquement à sa sortie 96.

L'électrovanne de sécurité 90 est configurée pour être dans sa première position si le signal électrique de commutation reçu par sa commande électrique 98 a la valeur haute, et dans sa deuxième position si le signal électrique de commutation reçu par sa commande électrique 98 a la valeur basse.

Le module d'isolement 20 est configuré pour bloquer la circulation de fluide pressurisé entre la source de pression 12 et la suspension pneumatique secondaire 14, par exemple en fonction d'un signal issu du TCMS, en cas de défaut de l'électrovanne de suspension secondaire 28 ou de l'élément de suspension 26.

Le fonctionnement du dispositif d'alimentation pneumatique 18 est décrit dans ce qui suit, lors d'un freinage de service du véhicule 10.

Lors du freinage de service, l'unité de commande 58 commande la commutation de l'électrovanne de freinage d'urgence 60 dans sa configuration de freinage de service.

En fonctionnement normal, la pression de suspension secondaire P_{SS} varie en fonction de la charge du véhicule 10, et est par exemple sensiblement comprise entre 4 bar et 8 bar. Le distributeur de sécurité 50 est alors dans sa première configuration et la pression de régulation P_{R} est égale à la pression de suspension secondaire P_{SS}. La pression mesurée par le capteur de pression 62 est donc égale à la pression de suspension secondaire P_{SS}, et est fonction de la charge du véhicule 10.

La pression d'alimentation P_{A} délivrée par l'électrovanne de freinage de service 56 et relayée par l'électrovanne de freinage d'urgence 60 au relais de débit 40 est commandée par l'unité de commande 58 en fonction du signal de consigne de freinage et de la pression de suspension secondaire P_{SS}, c'est-à-dire en fonction de la charge du véhicule 10. La pression de freinage P_{F} est alors par exemple égale à la pression d'alimentation P_{A}, le relais de débit 40 reliant son entrée à sa sortie. La puissance de freinage délivrée par le système de freinage pneumatique 16 est alors fonction de la charge du véhicule 10.

En cas de panne de la suspension pneumatique secondaire 14 et de dégonflement de l'élément de suspension 26, la pression de suspension secondaire P_{SS} est sensiblement égale à la pression atmosphérique. Le distributeur de sécurité 50 est alors dans sa deuxième configuration et la pression de régulation P_{R} est égale à la pression P de 9 bar délivrée par la source de pression 12.

La pression d'alimentation P_{A} est commandée par l'unité de commande 58 en fonction du signal de consigne de freinage et de la pression P délivrée par la source de pression 12. La pression de freinage P_{F} est supérieure à la pression d'alimentation P_{A}, délivrée par le système de distribution pneumatique 38 en fonctionnement normal lorsque le véhicule 10 est chargé. La puissance de freinage délivrée par le système de freinage pneumatique 16 est alors supérieure à la puissance de freinage en fonctionnement normal lorsque le véhicule 10 est chargé.

En d'autres termes, lorsque la suspension pneumatique secondaire 14 est en panne, le système de freinage 16 est commandé comme si une charge maximale était appliquée au véhicule 10 de transport, via le relais 40 et l'unité de commande 58, et la puissance de freinage est alors plus importante, ce qui permet d'assurer un freinage adéquat du véhicule 10, quelle que soit la charge de celui-ci.

Le fonctionnement du dispositif d'alimentation pneumatique 18 est décrit dans ce qui suit, lors d'un freinage d'urgence du véhicule 10.

Lors du freinage d'urgence, l'unité de commande 58 commande la commutation de l'électrovanne de freinage d'urgence 60 dans sa configuration de freinage d'urgence. La pression d'alimentation P_{A} est alors égale à la pression P délivrée par la source de pression 12.

Avantageusement, l'unité de commande 58 commande, en outre, l'électrovanne de freinage de service 56 pour qu'il soit dans sa position ouverte en admission. Cela permet d'assurer que la pression d'alimentation P_{A} est égale à la pression P délivrée par la source de pression 12, même en cas de blocage non voulu de l'électrovanne de freinage d'urgence 60 dans sa configuration de freinage de service.

En fonctionnement normal, le distributeur de sécurité 50 est dans sa première configuration et la pression de régulation P_{R} est égale à la pression de suspension secondaire P_{SS}. La pression de régulation P_{R} est alors fonction de la charge du véhicule 10.

Le relais de débit 40 fournit au système de freinage pneumatique 16 la pression de freinage P_{F} asservie à la valeur consigne égale à la pression de suspension secondaire P_{SS} multipliée par la valeur prédéfinie. La pression de freinage P_{F} est alors fonction de la charge du véhicule 10. La puissance de freinage délivrée par le système de freinage pneumatique 16 est fonction de la charge du véhicule 10.

En cas de panne de la suspension pneumatique secondaire 14 et de dégonflement de l'élément de suspension 26, le distributeur de sécurité 50 est dans sa deuxième configuration et la pression de régulation P_{R} est égale à la pression P de 9 bar délivrée par la source de pression 12.

Le relais de débit 40 fournit au système de freinage pneumatique 16 la pression de freinage P_{F} asservie à la valeur consigne égale à la pression P, délivrée par la source de pression 12, divisée par la valeur de rapport prédéfinie. La puissance de freinage délivrée par le système de freinage pneumatique 16 est alors dite maximale.

Dans le cas d'une pression de suspension secondaire P_{SS} anormalement faible, la puissance de freinage n'est pas fonction de la charge du véhicule 10 mais est maximale, permettant alors d'avoir une distance d'arrêt inférieure à la distance de freinage maximale de sécurité quel que soit la charge du véhicule 10.

On comprend alors que quel que soit le type de freinage, quel que soit la charge du véhicule 10, et même en cas de panne de la suspension pneumatique secondaire 14, la pression de freinage P_{F} délivrée par le dispositif d'alimentation pneumatique 18 permet au système de freinage pneumatique 16 de délivrer une puissance de freinage suffisante pour que la distance d'arrêt soit inférieure à la distance de freinage maximale.

## Revendications

1. Dispositif d'alimentation pneumatique (18) d'un système de freinage pneumatique (16) pour un véhicule (10) de transport, tel qu'un véhicule ferroviaire,
le véhicule (10) comprenant une source de pression (12) et une suspension pneumatique secondaire (14) alimentée par la source de pression (12), la suspension pneumatique secondaire (14) comportant un élément de suspension (26) propre à emmagasiner une quantité prédéfinie d'un fluide pressurisé à une pression de suspension secondaire (P_{SS}) prédéfinie,
le dispositif (10) comprenant :
- un système de distribution pneumatique (38) propre à être alimenté par la source de pression (12) et configuré pour délivrer une pression d'alimentation (P_{A}) en fonction d'un signal de consigne de freinage, et
- un relais de débit (40) comportant une entrée d'alimentation (42) connectée pneumatiquement au système de distribution pneumatique (38) et recevant la pression d'alimentation (P_{A}) délivrée par le système de distribution pneumatique (38), une entrée de régulation (44), propre à recevoir une pression de régulation (P_{R}), et une sortie (46), destinée à délivrer au système de freinage pneumatique (16) une pression de freinage (P_{F}) en fonction de la pression d'alimentation (P_{A}) et de la pression de régulation (P_{R}),
**caractérisé en ce que** le dispositif (18) comprend, en outre, un distributeur de sécurité (50) propre à être connecté pneumatiquement entre l'entrée de régulation (44) du relais de débit (40), la source de pression (12) et l'élément de suspension (26), le distributeur de sécurité (50) étant configuré pour commuter, en fonction de la pression de suspension secondaire (P_{SS}), entre une première configuration dans laquelle l'entrée de régulation (44) du relais de débit (40) est reliée pneumatiquement à l'élément de suspension (26), de sorte que la pression de régulation (P_{R}) soit fonction de la pression de suspension secondaire (P_{SS}), et une deuxième configuration dans laquelle l'entrée de régulation (44) du relais de débit (40) est reliée pneumatiquement à la source de pression (12), de sorte que la pression de régulation (P_{R}) est égale à une pression (P) fournie par la source de pression (12).

2. Dispositif (18) selon la revendication 1, dans lequel le distributeur de sécurité (50) comprend un distributeur pneumatique autonome (70) comportant une première entrée (72) destinée à être reliée pneumatiquement à l'élément de suspension (26), une deuxième entrée (74) destinée à être reliée pneumatiquement à la source de pression (12), une sortie (76) reliée pneumatiquement à l'entrée de régulation (44) du relais de débit (40), et une commande pneumatique (78) destinée à être reliée pneumatiquement à l'élément de suspension (26).

3. Dispositif (18) selon la revendication 1, dans lequel le distributeur de sécurité (50) comprend un commutateur de pression (80) propre à convertir la pression de suspension secondaire (P_{SS}) en un signal électrique de commutation, et une électrovanne de sécurité (90) comportant une première entrée (92) destinée à être reliée pneumatiquement à l'élément de suspension (26), une deuxième entrée (94) destinée à être reliée pneumatiquement à la source de pression (12), une sortie (96) reliée pneumatiquement à l'entrée de régulation (44) du relais de débit (40), et une commande électrique (98) reliée électriquement au commutateur de pression (80) et propre à recevoir le signal électrique de commutation.

4. Dispositif (18) selon l'une quelconque des revendications précédentes, dans lequel le distributeur de sécurité (50) est dans la première configuration si la pression de suspension secondaire (P_{SS}) est supérieure ou égale à une pression prédéterminée, et dans la deuxième configuration si la pression de suspension secondaire (P_{SS}) est inférieure à la pression prédéterminée, ladite pression prédéterminée étant supérieure à la pression atmosphérique.

5. Dispositif (18) selon l'une quelconque des revendications précédentes, dans lequel le système de distribution pneumatique (38) comprend :
- une électrovanne de freinage de service (56) connectée pneumatiquement entre la source de pression (12) et l'entrée d'alimentation (42) du relais de débit (40), apte à assurer l'admission et/ou l'échappement d'air à l'entrée d'alimentation (42) du relais de débit (40), et
- une unité de commande (58) configurée pour commander l'électrovanne de freinage de service (56) en fonction du signal de consigne de freinage.

6. Dispositif (18) selon la revendication 5, dans lequel le système de distribution pneumatique (38) comprend, en outre, un capteur de pression (62) propre à mesurer la pression de régulation (P_{R}) à l'entrée de régulation (44) du relais de débit (40), l'unité de commande (58) étant configurée pour commander l'électrovanne de freinage de service (56) en fonction du signal de consigne de freinage et de la pression de régulation (P_{R}) mesurée.

7. Dispositif (18) selon la revendication 5 ou 6, dans lequel le système de distribution pneumatique (38) comprend, en outre, une électrovanne de freinage d'urgence (60) connectée pneumatiquement entre l'entrée d'alimentation (44) du relais de débit (40), l'électrovanne de freinage de service (56) et la source de pression (12), l'unité de commande (58) étant configurée pour commander une commutation de l'électrovanne de freinage d'urgence (60) entre une configuration de freinage de service dans laquelle l'entrée d'alimentation (42) du relais de débit (40) est reliée pneumatiquement à l'électrovanne de freinage de service (56), et une configuration de freinage d'urgence dans laquelle l'entrée d'alimentation (42) du relais de débit (40) est reliée pneumatiquement à la source de pression (12).

8. Dispositif (18) selon l'une quelconque des revendications précédentes, dans lequel le relais de débit (40) est apte à assurer :
- l'admission d'air de son entrée d'alimentation (42) à sa sortie (46), si le rapport de la pression de régulation (P_{R}) sur la pression de freinage (P_{F}) est strictement supérieur à une valeur de rapport prédéfinie, et
- l'échappement d'air à sa sortie (46), si le rapport de la pression de régulation (P_{R}) sur la pression de freinage (P_{F}) est strictement inférieur à la valeur de rapport prédéfinie.

9. Véhicule (10) de transport, tel qu'un véhicule ferroviaire, comprenant :
- une source de pression (12),
- une suspension pneumatique secondaire (14) alimentée par la source de pression (12), la suspension pneumatique secondaire (14) comportant un élément de suspension (26) propre à emmagasiner une quantité prédéfinie de fluide pressurisé à une pression de suspension secondaire (P_{SS}) prédéfinie,
- un système de freinage pneumatique (16), et
- un dispositif d'alimentation pneumatique (18) du système de freinage pneumatique (16) selon l'une quelconque des revendications précédentes,
le système de distribution pneumatique (38) du dispositif d'alimentation pneumatique (18) étant alimenté par la source de pression (12), la sortie (46) du relais de débit (40) du dispositif d'alimentation pneumatique (18) délivrant au système de freinage pneumatique (16) la pression de freinage (P_{F}), et le distributeur de sécurité (50) du dispositif d'alimentation pneumatique (18) étant connecté pneumatiquement entre l'entrée de régulation (44) du relais de débit (40), la source de pression (12) et l'élément de suspension (26).

10. Véhicule (10) selon la revendication 9, dans lequel la suspension pneumatique secondaire (14) comporte, en outre, une électrovanne de suspension secondaire (28) connectée pneumatiquement entre la source de pression (12) et l'élément de suspension (26), ladite électrovanne de suspension secondaire (28) étant apte à réguler la pression de suspension secondaire (P_{SS}) en fonction d'un signal électrique de commande.

## Patentansprüche

1. Druckluftversorgungsvorrichtung (18) eines Druckluftbremssystems (16) für ein Transportfahrzeug (10), wie beispielsweise ein Schienenfahrzeug,
das Fahrzeug (10) umfassend eine Druckquelle (12) und eine sekundäre Druckluftfederung (14), die von der Druckquelle (12) versorgt wird, die sekundäre Druckluftfederung (14) umfassend ein Federungselement (26), das geeignet ist, um eine vordefinierte Menge eines Fluids zu speichern, das auf einen vordefinierten sekundären Federungsdruck (P_{SS}) unter Druck gesetzt wird,
die Vorrichtung (10) umfassend:
- ein Druckluftverteilungssystem (38), das geeignet ist, um von der Druckquelle (12) versorgt zu werden, und das konfiguriert ist, um einen Versorgungsdruck (P_{A}) abhängig von einem Bremsvorgabesignal zuzuführen, und
- ein Durchflussrelais (40), umfassend einen Versorgungseingang (42), der pneumatisch mit dem Druckluftverteilungssystem (38) verbunden ist und den von dem Druckluftverteilungssystem (38) zugeführten Versorgungsdruck (P_{A}) erhält, einen Regeleingang (44), der geeignet ist, einen Regeldruck (P_{R}) zu erhalten, und einen Ausgang (46), der dazu bestimmt ist, dem Druckluftbremssystem (16) abhängig von dem Versorgungsdruck (P_{A}) und dem Regeldruck (P_{R}) einen Bremsdruck (P_{F}) zuzuführen,
**dadurch gekennzeichnet, dass** die Vorrichtung (18) ferner einen Sicherheitsverteiler (50) umfasst, der geeignet ist, um pneumatisch zwischen dem Regeleingang (44) des Durchflussrelais (40), der Druckquelle (12) und dem Federungselement (26) verbunden zu sein, wobei der Sicherheitsverteiler (50) konfiguriert ist, um abhängig von dem sekundären Federungsdruck (P_{SS}), zwischen einer ersten Konfiguration, in der Regeleingang (44) des Durchflussrelais (40) pneumatisch mit dem Federelement (26) verbunden ist, sodass der Regeldruck (P_{R}) eine Funktion des sekundären Federungsdrucks (P_{SS}) ist, und einer zweiten Konfiguration, in der Regeleingang (44) des Durchflussrelais (40) pneumatisch mit der Druckquelle (12) verbunden ist, sodass der Regeldruck (P_{R}) gleich wie ein Druck (P) ist, der von der Druckquelle (12) zugeführt wird, umzuschalten.

2. Vorrichtung (18) nach Anspruch 1, wobei der Sicherheitsverteiler (50) einen eigenständigen pneumatischen Verteiler (70), umfassend einen ersten Eingang (72), der dazu bestimmt ist, pneumatisch mit dem Federungselement (26) verbunden zu sein, einen zweiten Eingang (74), der dazu bestimmt ist, pneumatisch Verbindung mit der Druckquelle (12) verbunden zu sein, einen Ausgang (76), der pneumatisch mit dem Regeleingang (44) des Durchflussrelais (40) verbunden ist, und eine Druckluftsteuerung (78), die dazu bestimmt ist, mit dem Federungselement (26) verbunden zu sein, umfasst.

3. Vorrichtung (18) nach Anspruch 1, wobei der Sicherheitsverteiler (50) einen Druckschalter (80), der geeignet ist, um den sekundären Federungsdruck (P_{SS}) in ein elektrisches Schaltsignal umzuwandeln, und ein Sicherheitsmagnetventil (90) umfasst, umfassend einen ersten Eingang (92), der dazu bestimmt ist, pneumatisch mit dem Federungselement (26) verbunden zu sein, einen zweiten Eingang (94), der dazu bestimmt ist, pneumatisch mit der Druckquelle (12) verbunden zu sein, einen Ausgang (96), der pneumatisch mit dem Regeleingang (44) des Durchflussrelais (40) verbunden ist, und eine elektrische Steuerung (98), die elektrisch mit dem Druckschalter (80) verbunden und dazu geeignet ist, das elektrische Schaltsignal zu empfangen.

4. Vorrichtung (18) nach einem der vorherigen Ansprüche, wobei der Sicherheitsverteiler (50) in der ersten Konfiguration ist, wenn der sekundäre Suspensionsdruck (P_{SS}) größer ist als oder gleich wie ein vorbestimmter Druck, und in der zweiten Konfiguration, wenn der sekundäre Federungsdruck (P_{SS}) kleiner ist als der vorbestimmte Druck, wobei der vorbestimmte Druck größer ist als der atmosphärische Druck.

5. System (18) nach einem der vorherigen Ansprüche, wobei das Druckluftverteilungssystem (38) Folgendes umfasst:
- ein Betriebsbremsmagnetventil (56), das pneumatisch zwischen der Druckquelle (12) und dem Versorgungseingang (42) des Durchflussrelais (40) verbunden ist, das angepasst ist, um den Einlass und/oder den Auslass von Luft an dem Versorgungseingang (42) des Durchflussrelais (40) zu gewährleisten, und
- eine Steuereinheit (58), die konfiguriert ist, um das Betriebsbremsmagnetventil (56) abhängig von dem Bremsvorgabesignal zu steuern.

6. Vorrichtung (18) nach Anspruch 5, wobei das Druckluftverteilungssystem (38) zusätzlich einen Drucksensor (62) umfasst, der geeignet ist, um den Regeldruck (P_{R}) an dem Regeleingang (44) des Durchflussrelais (40) zu messen, wobei die Steuereinheit (58) konfiguriert ist, um das Betriebsbremsmagnetventil (56) abhängig von dem Bremsvorgabesignal und dem gemessenen Regeldruck (P_{R}) zu steuern.

7. Vorrichtung (18) nach Anspruch 5 oder 6, wobei das Druckluftverteilungssystem (38) ferner ein Notbremsmagnetventil (60) umfasst, das pneumatisch zwischen dem Versorgungseingang (44) des Durchflussrelais (40), dem Betriebsbremsmagnetventil (56) und der Druckquelle (12) verbunden ist, wobei die Steuereinheit (58) konfiguriert ist, um ein Umschalten des Notbremsmagnetventils (60) zwischen einer Betriebsbremskonfiguration, bei der Versorgungseingang (42) des Durchflussrelais (40) pneumatisch mit dem Betriebsbremsmagnetventil (56) verbunden ist, und einer Notbremskonfiguration, bei der Versorgungseingang (42) des Durchflussrelais (40) pneumatisch mit der Druckquelle (12) verbunden ist, zu steuern.

8. System (18) nach einem der vorherigen Ansprüche, wobei das Durchflussrelais (40) angepasst ist, um Folgendes zu gewährleisten:
- den Lufteinlass von seinem Versorgungseingang (42) zu seinem Ausgang (46), wenn das Verhältnis des Regeldrucks (P_{R}) zum Bremsdruck (P_{F}) strikt größer ist als ein vordefinierter Verhältniswert, und
- den Auslass von Luft an seinem Ausgang (46), wenn das Verhältnis des Regeldrucks (P_{R}) zum Bremsdruck (P_{F}) strikt unter dem vordefinierten Verhältniswert ist.

9. Transportfahrzeug (10), wie beispielsweise ein Schienenfahrzeug, umfassend:
- eine Druckquelle (12),
- eine sekundäre Druckluftfederung (14), die von der Druckquelle (12) versorgt wird, die sekundäre Druckluftfederung (14) umfassend ein Federungselement (26), das geeignet ist, um eine vordefinierte Menge eines Fluids zu speichern, das auf einen vordefinierten sekundären Federungsdruck (P_{SS}) unter Druck gesetzt wird,
- ein Druckluftbremssystem (16), und
- eine Druckluftversorgungsvorrichtung (18) eines Druckluftbremssystems (16) nach einem der vorherigen Ansprüche,
wobei das Druckluftverteilungssystem (38) der Druckluftversorgungsvorrichtung (18) von der Druckquelle (12) versorgt wird, wobei der Ausgang (46) des Durchflussrelais (40) der Druckluftversorgungsvorrichtung (18) dem pneumatischen Bremssystem (16) den Bremsdruck (P_{F}) zuführt, und der Sicherheitsverteilerl (50) der Druckluftversorgungsvorrichtung (18) pneumatisch zwischen dem Regeleingang (44) des Durchflussrelais (40), der Druckquelle (12) und dem Federungselement (26) verbunden ist.

10. Fahrzeug (10) nach Anspruch 9, wobei die sekundäre Druckluftfederung (14) ferner ein sekundäres Federungsmagnetventil (28) aufweist, das pneumatisch zwischen der Druckquelle (12) und dem Federungselement (26) verbunden ist, wobei das sekundäre Federungsmagnetventil (28) angepasst ist, um den sekundären Federungsdruck (P_{SS}) Abhängig von einem elektrischen Steuersignal zu regulieren.

## Claims

1. Pneumatic supply device (18) of a pneumatic braking system (16) for a transport vehicle (10), such as a railway vehicle,
the vehicle (10) comprising a pressure source (12) and a secondary pneumatic suspension (14) supplied by the pressure source (12), the secondary pneumatic suspension (14) having a suspension element (26) adapted to store a predefined amount of pressurized fluid at a predefined secondary suspension pressure (P_{SS}),
the device (10) comprising:
- a pneumatic distribution system (38) adapted to be supplied by the pressure source (12) and configured to deliver a supply pressure (P_{A}) as a function of a braking setpoint signal, and
- a flow relay (40) comprising a supply inlet (42) pneumatically connected to the pneumatic distribution system (38) and receiving the supply pressure (P_{A}) from the pneumatic distribution system (38), a control inlet (44) adapted to receive a control pressure (P_{R}), and an outlet (46) for supplying the pneumatic braking system (16) with a braking pressure (P_{F}) as a function of the supply pressure (P_{A}) and the control pressure (P_{R}),
**characterized in that** the device (18) further comprises a safety valve (50) adapted to be pneumatically connected between the control inlet (44) of the flow relay (40), the pressure source (12) and the suspension element (26), the safety valve (50) being configured to switch, as a function of the secondary suspension pressure (P_{SS}), between a first configuration in which the control inlet (44) of the flow relay (40) is pneumatically connected to the suspension element (26), such that the control pressure (P_{R}) is a function of the secondary suspension pressure (P_{SS}), and a second configuration in which the control inlet (44) of the flow relay (40) is pneumatically connected to the pressure source (12), such that the control pressure (P_{R}) is equal to a pressure (P) supplied by the pressure source (12).

2. The device (18) according to claim 1, wherein the safety valve (50) comprises a self-contained pneumatic valve (70) having a first inlet (72) for pneumatic connection to the suspension element (26), a second inlet (74) for pneumatic connection to the pressure source (12), an outlet (76) pneumatically connected to the control inlet (44) of the flow relay (40), and a pneumatic control (78) for pneumatic connection to the suspension element (26).

3. The device (18) according to claim 1, wherein the safety valve (50) comprises a pressure switch (80) adapted to convert the secondary suspension pressure (P_{SS}) into an electrical switching signal, and a solenoid safety valve (90) comprising a first inlet (92) to be pneumatically connected to the suspension element (26), a second inlet (94) to be pneumatically connected to the pressure source (12), an outlet (96) pneumatically connected to the control inlet (44) of the flow relay (40), and an electrical control (98) electrically connected to the pressure switch (80) and adapted to receive the electrical switching signal.

4. The device (18) according to any one of the preceding claims, wherein the safety valve (50) is in the first configuration if the secondary suspension pressure (P_{SS}) is greater than or equal to a predetermined pressure, and in the second configuration if the secondary suspension pressure (P_{SS}) is less than the predetermined pressure, said predetermined pressure being greater than atmospheric pressure.

5. The device (18) according to any one of the preceding claims, wherein the pneumatic distribution system (38) comprises:
- a service brake solenoid valve (56) pneumatically connected between the pressure source (12) and the supply inlet (42) of the flow relay (40), adapted to provide air intake and/or exhaust to the supply inlet (42) of the flow relay (40), and
- a control unit (58) configured to control the service brake solenoid valve (56) in accordance with the braking setpoint signal.

6. The device (18) according to claim 5, wherein the pneumatic distribution system (38) further comprises a pressure sensor (62) adapted to measure the control pressure (P_{R}) at the control inlet (44) of the flow relay (40), the control unit (58) being configured to control the service brake solenoid valve (56) as a function of the brake setpoint signal and the measured control pressure (P_{R}).

7. The device (18) according to claim 5 or 6, wherein the pneumatic distribution system (38) further comprises an emergency brake solenoid valve (60) pneumatically connected between the supply inlet (44) of the flow relay (40), the service brake solenoid valve (56), and the pressure source (12), the control unit (58) being configured to control a switching of the emergency brake solenoid valve (60) between a service braking configuration in which the supply inlet (42) of the flow relay (40) is pneumatically connected to the service brake solenoid valve (56), and an emergency braking configuration in which the supply inlet (42) of the flow relay (40) is pneumatically connected to the pressure source (12).

8. The device (18) according to any one of the preceding claims, wherein the flow relay (40) is able to provide:
- air intake from its supply inlet (42) to its outlet (46), if the ratio of the control pressure (P_{R}) to the brake pressure (P_{F}) is strictly greater than a predefined ratio value, and
- air exhaust at its outlet (46), if the ratio of the control pressure (P_{R}) to the brake pressure (P_{F}) is strictly lower than the predefined ratio value.

9. A transport vehicle (10), such as a railway vehicle, comprising:
- a pressure source (12),
- a secondary pneumatic suspension (14) supplied by the pressure source (12), the secondary pneumatic suspension (14) having a suspension element (26) adapted to store a predefined amount of pressurized fluid at a predefined secondary suspension pressure (P_{SS}),
- a pneumatic braking system (16), and
- a pneumatic supply device (18) for the pneumatic braking system (16) according to any of the preceding claims,
the pneumatic distribution system (38) of the pneumatic supply device (18) being supplied by the pressure source (12), the outlet (46) of the flow relay (40) of the pneumatic supply device (18) supplying the pneumatic brake system (16) with the brake pressure (P_{F}), and the safety valve (50) of the pneumatic supply device (18) being pneumatically connected between the control inlet (44) of the flow relay (40), the pressure source (12) and the suspension element (26).

10. The vehicle (10) according to claim 9, wherein the secondary pneumatic suspension (14) further comprises a secondary suspension solenoid valve (28) pneumatically connected between the pressure source (12) and the suspension element (26), said secondary suspension solenoid valve (28) being adapted to regulate the secondary suspension pressure (P_{SS}) based on an electrical control signal.
